# EUROPÄISCHE PATENTANMELDUNG

(11) **EP 2 706 075 A1**
(43) Veröffentlichungstag der Anmeldung: **12.03.2014**
(21) Anmeldenummer: 12183893.2
(22) Anmeldetag: 11.09.2012
(51) Int. Cl.: C08G 18/32, C08G 18/48, C08G 18/66, C08G 18/76, C09J 175/08

(54) **Struktureller Polyurethanklebstoff mit tiefer Glasübergangstemperatur**

(71) Anmelder: Sika Technology AG, 6340 Baar (CH)
(72) Erfinder: Cannas, Rita, 8600 Dübendorf (CH); Burckhardt, Urs, 8049 Zürich (CH); Kelch, Steffen, 8102 Oberengstringen (CH)
(74) Vertreter: Sika Patent Attorneys

(57) **Zusammenfassung**

Die vorliegende Erfindung betrifft einen zweikomponentigen Polyurethanklebstoff mit hoher Festigkeit und Dehnbarkeit bei besonders tiefer Glasübergangstemperatur, geeignet als struktureller Klebstoff. Der Klebstoff enthält ein Triol, ein Diol, ein Polyamin, ein Polyisocyanat und ein Isocyanatgruppen aufweisendes Polyurethanpolymer in bestimmten Verhältnissen, sowie einen Fe(III) oder Ti(IV) oder Zr(IV) oder Hf(IV) Chelat-Komplex-Katalysator.

## Beschreibung

### Technisches Gebiet

Die Erfindung betrifft das Gebiet der zweikomponentigen Polyurethanklebstoffe, insbesondere der strukturellen Polyurethanklebstoffe.

### Stand der Technik

Zweikomponentige Polyurethanzusammensetzungen auf der Basis von Polyolen und Polyisocyanaten werden seit langem als elastische Klebstoffe eingesetzt. Sie härten nach dem Mischen schnell aus und können deshalb bereits nach kurzer Zeit Kräfte aufnehmen und übertragen.

Strukturelle Klebstoffe, auch Konstruktionsklebstoffe oder Montageklebstoffe genannt, werden in der Fertigungsindustrie verwendet, um Bauteile so miteinander zu verkleben, dass der Klebeverbund Teil einer dauerhaft belastbaren Konstruktion ist. Solche Klebstoffe sind typischerweise zäh-elastisch und müssen hohe Ansprüche in Bezug auf Verarbeitbarkeit, Festigkeit und Anhaftungskräfte erfüllen.

Für viele geklebte Konstruktionen ist es wichtig, dass der Klebstoff über den ganzen Bereich seiner Gebrauchstemperatur, insbesondere im Temperaturbereich von etwa -35 °C bis etwa +80 °C, eine möglichst einheitliche Festigkeit aufweist, beispielsweise ein möglichst einheitliches Elastizitätsmodul, sodass das mechanische Verhalten des Klebeverbunds in geeigneter Weise in die Berechnung der Konstruktion einfliessen kann. Erwünscht sind insbesondere zähelastische Klebstoffe von hoher Festigkeit, welche über eine möglichst tiefe Glasübergangstemperatur verfügen. Diese Klebstoffe sollen gut verarbeitbar sein, auch in höheren Schichtdicken von bis zu 10 Millimetern und mehr verwendbar sein, sowohl bei Umgebungstemperatur als auch in einem durch Wärme beschleunigten Aushärtungsprozess störungsfrei zur Endfestigkeit gehärtet werden können und eine gute Anbindung an metallische und nichtmetallische Substrate zeigen.

### Darstellung der Erfindung

Aufgabe der vorliegenden Erfindung ist es daher, einen Polyurethanklebstoff zur Verfügung zu stellen, welcher eine hohe Festigkeit mit einer besonders tiefen Glasübergangstemperatur vereint und sich damit hervorragend als struktureller Klebstoff eignet.

Überraschenderweise wurde gefunden, dass ein Polyurethanklebstoff nach Anspruch 1 diese Aufgabe löst. Durch seine spezielle Zusammensetzung weist der Klebstoff eine gute Verarbeitbarkeit mit hoher Standfestigkeit nach dem Vermischen der Komponenten, eine gute Anfangshaftfestigkeit, eine rasche und gleichzeitig störungfreie Aushärtung sowie eine sehr hohe Festigkeit im ausgehärteten Zustand auf. Insbesondere weist der Klebstoff ein ausgezeichnetes mechanisches Verhalten auf, also zäh-elatische Eigenschaften mit hoher Festigkeit und guter Dehnbarkeit, die über den Temperaturbereich von -35 °C bis +85 °C weitgehend konstant bleiben. Besonders überraschend ist, dass der Klebstoff durch die Wirkung eines speziellen Katalysators eine markant niedrigere Glasübergangstemperatur erzielt, als dies mit anderen Polyurethankatalysatoren der Fall ist.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Polyurethanklebstoff bestehend aus einer ersten und einer zweiten Komponente, wobei
- die erste Komponente
   a) mindestens ein Triol **A1** mit einem Molekulargewicht im Bereich von 1'000 bis 10'000 g/mol,
   b) mindestens ein Diol **A2** mit zwei primären Hydroxylgruppen und einem Molekulargewicht im Bereich von 60 bis 150 g/mol, und
   c) mindestens ein aliphatisches Polyamin **A3** mit einem Molekulargewicht im Bereich von 60 bis 500 g/mol enthält;
- die zweite Komponente
   d) mindestens ein Polyisocyanat **B1** und
   e) mindestens ein Isocyanatgruppen aufweisendes Polyurethanpolymer **B2** enthält;
- und der Polyurethanklebstoff weiterhin
   f) mindestens einen Katalysator **K** in Form eines Metall-Chelat-Komplexes enthält, worin das Metall ausgewählt ist aus der Gruppe bestehend aus Fe(III), Ti(IV), Zr(IV) und Hf(IV),
- wobei das Triol **A1,** das Diol **A2** und das Polyamin **A3** in einer solchen Menge vorhanden sind, dass
   g) das Verhältnis **V1** der Anzahl OH-Gruppen und NH₂-Gruppen von (**A2**+**A3**)/**A1** im Bereich von 3 bis 15 liegt, und
   h) das Verhältnis **V2** der Anzahl OH-Gruppen und NH₂-Gruppen von **A2**/**A3** im Bereich von 2 bis 30 liegt.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Der Begriff "Polyurethanpolymer" umfasst sämtliche Polymere, welche nach dem sogenannten Diisocyanat-Polyadditions-Verfahren hergestellt werden. Der Begriff "Polyurethanpolymer" umfasst auch Isocyanatgruppen aufweisende Polyurethanpolymere, wie sie aus der Umsetzung von Polyisocyanaten und Polyolen erhältlich sind und selber Polyisocyanate darstellen und oft auch Prepolymere genannt werden.

Unter dem "Molekulargewicht" versteht man bei Polymeren im vorliegenden Dokument stets das mittlere Molekulargewicht.

Als "primäre Hydroxylgruppe" wird eine OH-Gruppe bezeichnet, welche an ein C-Atom mit zwei Wasserstoffen gebunden ist.

Der Begriff "Phasenseparierung" beschreibt in diesem Dokument den Vorgang der Entmischung von hochgeordneten ("kristallinen") Bereichen, auch "Hartsegmente" genannt, und wenig geordneten ("amorphen") Bereichen, auch "Weichsegmente" genannt, bei der Aushärtung des Polyurethanklebstoffes.

Als "Offenzeit" wird in diesem Dokument die Zeit bezeichnet, innerhalb welcher die zu verklebenden Teile gefügt sein müssen, nachdem die Komponenten vermischt sind.

Als "Glasübergangstemperatur" wird im vorliegenden Dokument die mittels dynamisch-mechanischer Thermo-Analyse (DMTA) bestimmte Glasübergangstemperatur bezeichnet, welche beim Maximalwert des Quotienten aus Verlustmodul G" / Speichermodul G' abgelesen wird.

Der Begriff "Festigkeit" bezeichnet im vorliegenden Dokument die Festigkeit des ausgehärteten Klebstoffs, wobei mit Festigkeit insbesondere die Zugfestigkeit und das Elastizitätsmodul (E-Modul) im Dehnungsbereich bis 10% gemeint sind.

Als "Raumtemperatur" wird im vorliegenden Dokument eine Temperatur von 25 °C bezeichnet.

Der Begriff "lagerstabil" bezeichnet die Eigenschaft einer Zusammensetzung, dass sie in einem geeigneten Gebinde während mehreren Wochen bis einige Monate bei Raumtemperatur aufbewahrt werden kann, ohne dass sie sich in ihren Anwendungs- oder Gebrauchseigenschaften durch die Lagerung wesentlich verändert.

Als Triol **A1** geeignet sind insbesondere Polyoxyalkylentriole, auch Polyethertriole genannt. Dies sind Polymerisationsprodukte von Ethylenoxid, 1,2-Propylenoxid, 1,2- oder 2,3-Butylenoxid oder Mischungen davon. Typischerweise sind sie polymerisiert mit Hilfe eines Startermoleküls mit drei aktiven Wasserstoffatomen wie beispielsweise Glycerin, 1,1,1-Trimethylolethan, 1,1,1-Trimethylolpropan oder Mischungen davon.

Bevorzugt als Triol **A1** sind Polyoxypropylentriole, Polyoxyethylentriole und Polyoxypropylen-Polyoxyethylen-Triole.

Besonders bevorzugt weist das Triol **A1** primäre Hydroxylgruppen auf. Dadurch ist der Polyurethanklebstoff weniger anfällig auf unerwünschte Reaktionen von Isocyanatgruppen mit gegebenenfalls vorhandenem Wasser, wodurch Blasen und eine unvollständige Aushärtung entstehen können.

**Besonders** bevorzugt als Triol **A1** sind sogenannte "EO-endcapped" (ethylene oxide-endcapped) Polyoxypropylentriole. Letztere sind spezielle Polyoxypropylenpolyoxyethylentriole, die beispielsweise dadurch erhalten werden, dass reine Polyoxypropylentriole nach Abschluss der Polypropoxylierung mit Ethylenoxid weiter alkoxyliert werden und dadurch primäre Hydroxylgruppen aufweisen.

Das Triol **A1** weist bevorzugt eine mittlere OH-Funktionalität im Bereich von 2.2 bis 3 auf. Mit solchen Triolen **A1** werden Klebstoffe mit guten mechanischen Eigenschaften erhalten.

Das Triol **A1** weist bevorzugt ein Molekulargewicht im Bereich von 3'000 bis **8'000** g/mol, besonders bevorzugt von 4'000 bis 6'000 g/mol, auf. Ein solches Triol weist eine gute Kombination aus hoher Funktionalität und Kettenlänge auf, sodass damit ein Klebstoff mit guten mechanischen Eigenschaften erhalten wird.

Das Triol **A1** wird bevorzugt in einer Menge von 30 bis 70 Gewichts-% bezogen auf das Gesamtgewicht der ersten Komponente eingesetzt.

Als Diol **A2** geeignet sind insbesondere 1,2-Ethandiol, 1,3-Propandiol, 1,4-Butandiol, 1,5-Pentandiol, 1,6-Hexandiol, 1,3-Cyclohexandimethanol, 1,4-Cyclohexandimethanol und Diethylenglykol. Diese Diole sind gut erhältlich und weisen primäre, sterisch kaum gehinderte Hydroxygruppen auf, welche mit Isocyanatgruppen besonders reaktiv sind.

Bevorzugt handelt es sich beim Diol **A2** um ein lineares Diol, ausgewählt aus der Gruppe bestehend aus 1,3-Propandiol, 1,4-Butandiol und 1,5-Pentandiol. Diese Diole sind besonders gut handhabbar, da sie kaum hydrophil und bei Raumtemperatur flüssig sind und bei der Aushärtung des Klebstoffes eine hohe Festigkeit bei guter Dehnbarkeit über einen weiten Temperaturbereich begünstigen. Davon am meisten bevorzugt ist 1,4-Butandiol.

Ebenfalls speziell bevorzugt ist 1,5-Pentandiol. Damit werden zusammen mit dem Katalysator **K** besonders hohe E-Moduli und sehr tiefe Glasübergangstemperaturen erreicht.

Als aliphatisches Polyamin **A3** geeignet sind Amine mit zwei oder drei aliphatischen Aminogruppen, insbesondere die folgenden handelsüblichen Polyamine:
- aliphatische, cycloaliphatische oder arylaliphatische primäre Diamine, wie insbesondere Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, 1,4-Diamino-2,2,6-trimethylcyclohexan (TMCDA), Bis-(4-aminocyclohexyl)-methan (H₁₂-MDA), Bis-(4-amino-3-methylcyclohexyl)-methan, Bis-(4-amino-3-ethylcyclohexyl)-methan, Bis-(4-amino-3,5-dimethylcyclohexyl)-methan, Bis-(4-amino-3-ethyl-5-methylcyclohexyl)-methan (M-MECA), 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 2,5(2,6)-Bis-(aminomethyl)-bicyclo[2.2.1]heptan (NBDA), 3(4),8(9)-Bis-(aminomethyl)-tricyclo[5.2.1.0^{2,6}]decan, 1,8-Menthandiamin und 1,3- und 1,4-Bis-(aminomethyl)benzol;
- Ethergruppen-haltige aliphatische primäre Diamine, wie insbesondere Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin und höhere Oligomere dieser Diamine, 3,9-Bis-(3-aminopropyl)-2,4,8,10-tetraoxaspiro-[5.5]undecan, Bis-(3-aminopropyl)polytetrahydrofurane und andere Polytetrahydrofuran-diamine, Jeffamine^{®} RFD-270 (von Huntsman), sowie Polyoxyalkylen-Diamine ("Polyether-Diamine"). Letztere stellen Produkte aus der Aminierung von Polyoxyalkylen-Diolen dar und sind beispielsweise erhältlich unter dem Namen Jeffamine^{®} (von Huntsman), unter dem Namen Polyetheramin (von BASF) oder unter dem Namen PC Amine^{®} (von Nitroil). Insbesondere geeignete Polyoxyalkylen-Diamine sind Jeffamine^{®} D-230, Jeffamine^{®} D-400, Polyetheramin D 230, Polyetheramin D 400, PC Amine^{®} DA 250 und PC Amine^{®} DA 400; und
- Polyoxyalkylen-Triamine ("Polyether-Triamine"), welche Produkte aus der Aminierung von Polyoxyalkylen-Triolen darstellen und beispielsweise erhältlich sind unter dem Handelsnamen Jeffamine^{®} (von Huntsman), unter dem Namen Polyetheramin (von BASF) oder unter dem Namen PC Amine^{®} (von Nitroil), wie insbesondere Jeffamine^{®} T-403, Polyetheramin T403, und PC Amine^{®} TA 403.

Besonders bevorzugt ist das Polyamin **A3** ausgewählt aus der Gruppe bestehend aus 1,5-Diamino-2-methylpentan, 2,2,4- und 2,4,4-Trimethylhexamethylendiamin, 1,8-Octandiamin, 1,10-Decandiamin, 1,12-Dodecandiamin, 1-Amino-3-aminomethyl-3,5,5-trimethylcyclohexan, 2- und 4-Methyl-1,3-diaminocyclohexan und Mischungen davon, 1,3-Bis-(aminomethyl)cyclohexan, 1,4-Bis-(aminomethyl)cyclohexan, 2,5(2,6)-Bis-(aminomethyl)-bicyclo[2.2.1]heptan, 3(4),8(9)-Bis-(aminomethyl)-tricyclo[5.2.1.0^{2,6}]decan, Bis-(2-aminoethyl)ether, 3,6-Dioxa-octan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 1,3- Bis-(aminomethyl)benzol und 1,4-Bis-(aminomethyl)benzol.

Diese Polyamine führen bei der Reaktion mit Isocyanaten zu Harnstoffgruppen, welche besonders gut phasenseparieren. Damit hergestellte Klebstoffe weisen besonders hohe Festigkeiten, insbesondere hohe Elastizitätsmoduli, und eine wenig ausgeprägte Abhängigkeit der mechanischen Eigenschaften von der Temperatur auf.

Davon bevorzugt sind 1,3-Bis-(aminomethyl)cyclohexan und 1,3-Bis-(aminomethyl)benzol, am meisten bevorzugt ist 1,3-Bis-(aminomethyl)benzol.Mit diesen Polyaminen entstehen ausgehärtete Klebstoffe mit ganz besonders hohen Festigkeiten.

Die Auswahl des Triols **A1**, des Diols **A2** und des Polyamins **A3** und deren Einsatz in bestimmten, sorgfältig aufeinander abgestimmten Verhältnissen verleiht dem Klebstoff gute Verarbeitungseigenschaften und eine ausgezeichnete Festigkeit, wobei amorphe und kristalline Bereiche sehr gut entmischt vorliegen.

Das Verhältnis **V1** liegt bevorzugt bei 3-10. Solche Klebstoffe zeigen eine besonders niedrige Glasumwandlungstemperaur.

Das Verhältnis **V1** liegt besonders bevorzugt bei 3-9. Solche Klebstoffe zeigen eine ganz besonders niedrige Glasumwandlungstemperaur.

Das Verhältnis **V1** liegt bevorzugt bei 4-15. Solche Klebstoffe zeigen ein hohes Elastizitätsmodul.

**Das** Verhältnis **V1** liegt besonders besonders bevorzugt bei 5-15. Solche Klebstoffe zeigen ein besonders hohes Elastizitätsmodul.

Das Verhältnis **V1** liegt bevorzugt im Bereich von 4 bis 10, insbesondere 5 bis 9. Solche Klebstoffe eine besonders niedrige Glasumwandlungstemperaur bei gleichzeitig besonders hohem Elastizitätsmodul.

Das Verhältnis **V2** liegt bevorzugt bei 2-15. Solche Klebstoffe zeigen eine gewisse Standfestigkeit bei einer langen Offenzeit.

Das Verhältnis **V2** liegt besonders bevorzugt bei 2-10. Solche Klebstoffe zeigen eine gute Standfestigkeit bei einer gut handhabbaren Offenzeit.

Das Verhältnis **V2** liegt bevorzugt bei 4.5-30 oder darüber. Solche Klebstoffe zeigen eine sehr gute Standfestigkeit bei einer kurzen Offenzeit.

Das Verhältnis **V2** liegt besonders bevorzugt bei 5-30. Solche Klebstoffe zeigen eine gute Standfestigkeit bei einer gut handhabbaren Offenzeit.

Das Verhältnis **V2** liegt bevorzugt im Bereich von 4.5 bis 15, insbesondere im Bereich von 5 bis 10. Solche Klebstoffe zeigen eine gute Kombination aus guter Standfestigkeit bei der Applikation und gut handhabbarer Offenzeit.

Als Polyisocyanat **B1** geeignet sind insbesondere monomere Di- oder Triisocyanate, sowie Oligomere, Polymere und Derivate der monomeren Di- oder Triisocyanaten, sowie beliebige Mischungen davon.

Geeignete aromatische monomere Di- oder Triisocyanate sind insbesondere 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-di-isocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat.

Geeignete aliphatische monomere Di- oder Triisocyanate sind insbesondere 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'-und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)cyclohexan, m- und p-Xylylendiisocyanat (m- und p-XDI), m- und p-Tetramethyl-1,3-und -1,4-xylylendiisocyanat (m- und p-TMXDI), Bis-(1-Isocyanato-1-methyl-ethyl)naphthalin, Dimer- und Trimerfettsäureisocyanate wie 3,6-Bis-(9-isocya-natononyl)-4,5-di-(1-heptenyl)cyclohexen (Dimeryldiisocyanat) und α,α,α',α',α",α"-Hexamethyl-1,3,5-mesitylentriisocyanat.

Geeignete Oligomere, Polymere und Derivate der genannten monomeren Di-und Triisocyanate sind insbesondere abgeleitet von MDI, TDI, HDI und IPDI. Davon insbesondere geeignet sind kommerziell erhältliche Typen, insbesondere HDI-Biurete wie Desmodur^{®} N 100 und N 3200 (von Bayer), Tolonate^{®} HDB und HDB-LV (von Rhodia) und Duranate^{®} 24A-1 00 (von Asahi Kasei); HDI-Isocyanurate, wie Desmodur^{®} N 3300, N 3600 und N 3790 BA (alle von Bayer), Tolonate^{®} HDT, HDT-LV und HDT-LV2 (von Rhodia), Duranate^{®} TPA-100 und THA-1 00 (von Asahi Kasei) und Coronate^{®} HX (von Nippon Polyurethane); HDI-Uretdione wie Desmodur^{®} N 3400 (von Bayer); HDI-Iminooxadiazindione wie Desmodur^{®} XP 2410 (von Bayer); HDI-Allophanate wie Desmo-dur^{®} VP LS 2102 (von Bayer); IPDI-Isocyanurate, wie beispielsweise in Lösung als Desmodur^{®} Z 4470 (von Bayer) oder in fester Form als Vestanat^{®} T1890/ 100 (von Degussa); TDI-Oligomere wie Desmodur^{®} IL (von Bayer); sowie gemischte Isocyanurate auf Basis TDI/HDI, zum Beispiel als Desmodur^{®} HL (von Bayer). Weiterhin insbesondere geeeignet sind bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen oder MDI-Urethanen darstellen, bekannt unter Handelsnamen wie Desmodur^{®} CD, Desmodur^{®} PF, Desmodur^{®} PC (alle von Bayer) oder Isonate^{®} M 143 (von Dow), sowie Gemische aus MDI und MDI-Homologen (polymeres MDI oder PMDI), erhältlich unter Handelsnamen wie Desmodur^{®} VL, Desmodur^{®} VL50, Desmodur^{®} VL R10, Desmodur^{®} VL R20, Desmodur^{®} VH 20 N und Desmodur^{®} VKS 20F (alle von Bayer), Isonate^{®} M 309, Voranate^{®} M 229 und Voranate^{®} M 580 (alle von Dow) oder Lupranat^{®} M 10 R (von BASF). Die vorgenannten oligomeren Polyisocyanate stellen in der Praxis üblicherweise Gemische von Substanzen mit unterschiedlichen Oligomerisierungsgraden und/oder chemischen Strukturen dar. Vorzugsweise weisen sie eine mittlere NCO-Funktionalität von 2.1 bis 4.0 auf.

Bevorzugt als Polyisocyanat **B1** sind bei Raumtemperatur flüssige Formen von MDI. Dies sind insbesondere sogenannt polymeres MDI sowie MDI mit Anteilen von Oligomeren oder Derivaten davon. Der Gehalt an MDI (=4,4'-, 2,4'- und 2,2'-Diphenylmethandiisocyanat und beliebige Gemische dieser Isomeren) solcher flüssiger Formen von MDI beträgt insbesondere 50 bis 95 Gewichts-%, insbesondere 60 bis 90 Gewichts-%.

Besonders bevorzugt als Polyisocyanat **B1** sind polymeres MDI und insbesondere bei Raumtemperatur flüssige MDI-Typen, welche Anteile von MDI-Carbodiimiden oder deren Addukten enthalten.

Mit diesen Polyisocyanaten **B1** werden besonders gute Verarbeitungseigenschaften und besonders hohe Festigkeiten erhalten.

Das Polyurethanpolymer **B2** weist bevorzugt 50 - 95 Massenprozente, insbesondere 70 - 90 Massenprozente, Polyoxyalkyleneinheiten, besonders bevorzugt Polyoxyethylen- und/oder Polyoxypropyleneinheiten, insbesondere Polyoxypropyleneinheiten, auf. Ein solches Polyurethanpolymer weist eine tiefe Viskosität auf und ermöglicht gute Dehnbarkeiten.

Das Polyurethanpolymer **B2** weist bevorzugt ein mittleres Molekulargewicht von 1 `000 bis 20'000 g/mol, besonders bevorzugt von 2'000 bis 10'000 g/mol, auf.

Das Polyurethanpolymer **B2** weist bevorzugt eine mittlere NCO-Funktionalität im Bereich von 1.7 bis 3, insbesondere von 1.8 bis 2.5, auf. Ein solches Polyurethanpolymer ermöglicht gute Verarbeitungseigenschaften und gute mechanische Eingenschaften im ausgehärteten Zustand.

Besonders bevorzugt weist das Polyurethanpolymer **B2** eine mittlere NCO-Funktionalität von 2.05 bis 2.5 auf. Ein solches Polyurethanpolymer ermöglicht eine gute Dehnbarkeit bei hoher Festigkeit.

Das Polyurethanpolymer **B2** weist bevorzugt einen Gehalt an freien Isocyanatgruppen von 1 bis 10 Gewichts-%, besonders bevorzugt von 1 bis 5 Gewichts-%, auf.

Das Polyurethanpolymer **B2** weist bevorzugt Urethangruppen und freie Isocyanatgruppen auf, welche abgeleitet sind von 4,4'-Diphenylmethandiisocyanat. Damit werden bei der Aushärtung des Klebstoffes besonders gute Hartsegmente und somit besonders hohe Festigkeiten erhalten.

Ein geeignetes Isocyanatgruppen aufweisendes Polyurethanpolymer **B2** ist erhältlich aus der Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von 1.3 bis 5, insbesondere eines von 1.5 bis 3, eingehalten wird. Unter dem "NCO /OH-Verhältnis" wird das Verhältnis der Anzahl der eingesetzten Isocyanatgruppen zu der Anzahl der eingesetzten Hydroxylgruppen verstanden. Bevorzugt verbleibt im Polyurethanpolymer **B2** nach der Umsetzung aller Hydroxylgruppen des Polyols ein Gehalt an freien Isocyanatgruppen von 1 bis 10 Gewichts-%, besonders bevorzugt von 1 bis 5 Gewichts-%.

Das Polyurethanpolymer **B2** weist ein mittleres Molekulargewicht von vorzugsweise 500 g/mol oder darüber auf. Insbesondere weist das Polyurethanpolymer **B2** ein mittleres Molekulargewicht von 1'000 bis 20'000 g/mol, bevorzugt von 2'000 bis 10'000 g/mol, auf.

Weiterhin weist das Polyurethanpolymer **B2** bevorzugt eine mittlere NCO-Funktionalität im Bereich von 1.7 bis 3, insbesondere von 1.8 bis 2.5, auf.

Ein solches Polyurethanpolymer ermöglicht gute Verarbeitungseigenschaften und gute mechanische Eingenschaften im ausgehärteten Zustand.

Als Polyol zur Herstellung eines Polyurethanpolymers **B2** sind insbesondere die folgenden handelsüblichen Polyole oder Mischungen davon geeignet:
- Polyoxyalkylenpolyole, auch Polyetherpolyole oder Oligoetherole genannt, welche Polymerisationsprodukte von Ethylenoxid, 1,2-Propylenoxid, 1,2-oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, Cs0H oder Alkalialkoholaten.

Besonders geeignet sind Polyoxyalkylendiole oder Polyoxyalkylentriole, insbesondere Polyoxyethylen- und Polyoxypropylendi- und -triole.

Ganz besonders geeignet sind Polyoxyalkylendiole und -triole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol.

Speziell geeignet sind sogenannte Ethylenoxid-terminierte ("EO-endcapped", ethylene oxide-endcapped) Polyoxypropylenpolyole.
- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.

Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.

Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole, oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro^{®} (früher Hycar^{®}) CTBN und CTBNX und ETBN von Nanoresins AG, Deutschland, bzw. Emerald Performance Materials LLC) hergestellt werden können; sowie hydrierte polyhydroxyfunktionelle Polymere oder Copolymere von Dienen.

Als Polyol zur Herstellung eines Polyurethanpolymers **B2** bevorzugt sind Polyoxyalkylenpolyole, Polyesterpolyole, Polycarbonatpolyole und Polyacrylatpolyole. Besonders bevorzugt sind Polyoxyalkylenpolyole, insbesondere Polyoxypropylenpolyole und Polyoxyethylen-Polyoxypropylen-Mischpolyole.

Das Polyol zur Herstellung eines Polyurethanpolymers **B2** weist bevorzugt ein Molekulargewicht von 500 - 20'000 g/mol, insbesondere von 1'000 bis 8'000 g/mol, auf.

Das Polyol zur Herstellung eines Polyurethanpolymers **B2** ist bevorzugt ein Diol oder eine Mischung aus mindestens einem Diol und mindestens einem Triol, insbesondere eine Mischung aus mindestens einem Diol und mindestens einem Triol.

Zusammen mit dem Polyol können Anteile von niedrigmolekularen zwei- oder mehrwertigen Alkohole zur Herstellung des Polyurethanpolymers **B2** mitverwendet werden, insbesondere 1,2-Ethandiol, 1,2-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole.

Als Polyisocyanat zur Herstellung eines Polyurethanpolymers **B2** sind insbesondere die folgenden handelsüblichen Polyisocyanate oder Mischungen davon geeignet:
2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-di-isocyanatodiphenyl (TODI), 1,3,5-Tris-(isocyanatomethyl)benzol, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)cyclohexan, m- und p-Xylylendiisocyanat (m- und p-XDI) und m- und p-Tetramethyl-1,3- und -1,4-xylylendiisocyanat (m- und p-TMXDI). Bevorzugt sind MDI, TDI, IPDI und HDI. Besonders bevorzugt ist MDI. Am meisten bevorzugt ist 4,4'-Diphenylmethandiisocyanat. Mit diesem MDI-Isomeren werden bei der Aushärtung mit den Diolen **A2** und Polyaminen **A3** besonders gute Hartsegmente und somit besonders hohe Festigkeiten erhalten.

Vorzugsweise handelt es sich beim Polyisocyanat **B1** und dem zur Herstellung des Polyurethanprepolymers **B2** verwendeten Polyisocyanat um einen unterschiedlichen Typ Polyisocyanat.

Besonders bevorzugt handelt es sich beim Polyisocyanat **B1** um ein bei Raumtemperatur flüssiges MDI und beim zur Herstellung des Polyurethanpolymers **B2** verwendeten Polyisocyanat um 4,4'-Diphenylmethandiisocyanat, welches bei Raumtemperatur typischerweise fest ist. Damit ist die zweite Komponente bei Raumtemperatur flüssig, was eine einfache Verarbeitung ermöglicht, und es werden besonders gute mechanische Eingenschaften ermöglicht. Eine definierte Mischung aus Polyisocyanat **B1** und Polyurethanpolymer **B2** lässt sich dadurch erreichen, dass das Polyurethanpolymer **B2** vorgängig separat hergestellt wird, bevor es mit dem Polyisocyanat **B1** vermischt wird.

Bevorzugt erfolgt die Herstellung das Polyurethanpolymers **B2** somit nicht in Anwesenheit des Polyisocyanates **B1.**

Vorzugsweise beträgt das Gewichtsverhältnis zwischen dem Polyisocyanat **B1** und dem Polyurethanpolymer **B2** 0.25 bis 4, bevorzugt 0.25 bis 2, besonders bevorzugt 0.3 bis 1.5, und insbesondere 0.4 bis 1.0. Eine solche zweite Komponente ermöglicht Klebstoffe mit guter Verarbeitbarkeit, hoher Festigkeit und hoher Dehnung.

Der Polyurethanklebstoff enthält mindestens einen Katalysator **K** in Form eines Metall-Chelat-Komplexes, worin das Metall ausgewählt ist aus der Gruppe bestehend aus Fe(III), Ti(IV), Zr(IV) und Hf(IV).

Im vorliegenden Dokument werden Metall-Carboxylate und Metall-Alkoholate nicht als Metall-Chelat-Komplexe bezeichnet, wenn sie nicht mindestens einen Chelat-Liganden aufweisen.

Geeignete Chelat-Liganden am Katalysator **K** sind insbesondere
- 1,3-Diketonate, insbesondere Acetylacetonat (2,4-Pentandionat), 2,2,6,6-Tetramethyl-3,5-heptandionat, 1,3-Diphenyl-1,3-propandionat (Dibenzoylmethanat), 1-Phenyl-1,3-butanandionat und 2-Acetylcyclohexanonat,
- 1,3-Ketoesterate, insbesondere Methylacetoacetat, Ethylacetoacetat, Ethyl-2-methylacetoacetat, Ethyl-2-ethylacetoacetat, Ethyl-2-hexylacetoacetat, Ethyl-2-phenylacetoacetat, Propylacetoacetat, Isopropylacetoacetat, Butylacetoacetat, tert.Butylacetoacetat, Ethyl-3-oxo-valerat, Ethyl-3-oxo-hexanoat und 2-Oxo-cyclohexancarbonsäureethylesterat; und
- 1,3-Ketoamidate, insbesondere N,N-Diethyl-3-oxo-butanamidat, N,N-Dibutyl-3-oxo-butanamidat, N,N-Bis(2-ethylhexyl)-3-oxo-butanamidat, N,N-Bis(2-methoxyethyl)-3-oxo-butanamidat, N,N-Dibutyl-3-oxo-heptanamidat, N,N-Bis(2-methoxyethyl)-3-oxo-heptanamidat, N,N-Bis(2-ethylhexyl)-2-oxo-cyclopentancarboxamidat, N,N-Dibutyl-3-oxo-3-phenylpropanamidat, N,N-Bis(2-methoxyethyl)-3-oxo-3-phenylpropanamidat und N-Polyoxyalkylen-1,3-ketoamidate wie insbesondere Acetoamidate von Polyoxyalkylenaminen mit ein, zwei oder drei Aminogruppen und einem Molekulargewicht bis 5000 g/mol, insbesondere die von Huntsman unter dem Handelsnamen Jeffamine^{®} erhältlichen Typen SD-231, SD-401, SD-2001, ST-404, D-230, D-400, D-2000, T-403, M-600 und XTJ-581.

Der Katalysator **K** bewirkt im Polyurethan klebstoff eine rasche Aushärtung, die überraschend störungsarm abläuft; insbesondere entstehen weniger oft Blasen als mit anderen Katalysatoren nach dem Stand der Technik. Zusätzlich beeinflusst der Katalysator **K** den Polyurethanklebstoff überraschenderweise so, dass dieser nach der Aushärtung über eine signifikant tiefere Glasübergangstemperatur verfügt, als wenn andere Katalysatoren nach dem Stand der Technik, wie beispielsweise 1,4-Diazobicyclo[2.2.2]octan (DABCO) oder Dibutylzinndilaurat, eingesetzt werden. Für einen Strukturklebstoff ist eine tiefe Glasübergangstemperatur sehr vorteilhaft, da der Klebstoff bei Abkühlung in seinen mechanischen Eigenschaften konstanter bleibt und weniger schnell an den Punkt kommt, wo er stark versteift bis versprödet. Bei herkömmlichen Strukturklebstoffen auf Basis von zweikomponentigen Polyurethanzusammensetzungen liegt die Glasübergangstemperatur typischerweise in der Nähe von -30 °C oder darüber. Weil solche Temperaturwerte unter extremen Winterbedingungen erreicht werden, kann eine Verschiebung des Glasübergangstemperatur um einige Grad Celsius nach unten ausreichen, um einen sicheren Einsatz des Klebstoffs auch bei diesen Bedingungen zu ermöglichen.

Bevorzugt weist der Katalysator K mindestens einen Chelat-Liganden ausgewählt aus der Gruppe bestehend aus 1,3-Diketonat, 1,3-Ketoesterat und 1,3-Ketoamidat auf.

Neben mindestens einem der genannten Chelat-Liganden kann der Metall-Chelat-Komplex zusätzliche Liganden, welche keine Chelate bilden, aufweisen, insbesondere Alkoholate, wie Methanolat, Ethanolat, Propanolat, Isopropanolat, Butanolat, tert.Butanolat, Isobutanolat, Pentanolat, Neopentanolat, Hexanolat, Ocanolat oder 2-Ethyl-hexanolat; sowie Carboxylate, wie Formiat, Acetat, Propionat, Butanoat, Isobutanoat, Pentanoat, Hexanoat, Cyclohexanoat, Heptanoat, Octanoat, 2-Ethyl-hexanoat, Nonanoat, Decanoat, Neodecanoat, Undecanoat, Dodecanoat, Lactat, Oleat, Citrat, Benzoat, Salicylat und Phenylacetat.

Besonders bevorzugte Katalysatoren **K** stellen die folgenden Metall-Chelat-Komplexe dar:
Eisen(III)-tris(acetylacetonat), Eisen(III)-tris(1,3-diphenylpropan-1,3-dionat), Eisen(III)-tris(ethylacetoacetat), Eisen(111)-tris(tert.butylacetoacetat), Eisen(III)-tris(ethyl-3-oxo-valerat), Eisen(III)-tris(ethyl-3-oxo-hexanoat), Eisen(III)-tris-(N,N-diethyl-3-oxo-butanamidat), Eisen(III)-tris(N,N-dibutyl-3-oxo-butanamidat), Eisen(III)-tris(N,N-bis(2-ethylhexyl)-3-oxo-butanamidat), Eisen(III)-tris(N,N-bis-(2-methoxyethyl)-3-oxo-butanamidat), Eisen(III)-tris(N,N-dibutyl-3-oxo-heptanamidat), Eisen(III)-tris(N,N-Bis(2-Methoxyethyl)-3-oxo-heptanamidat), Eisen(III)-tris(N,N-bis(2-ethylhexyl)-2-oxo-cyclopentancarboxamidat) und Eisen(III)-tris(N,N-dibutyl-3-oxo-3-phenylpropanamidat); Titan(IV)-bis(acetylacetonato)-diisopropylat, Titan(IV)-bis(acetylacetonato)-diisobutylat, Titan(IV)-bis(acetylacetonato)-bis(2-ethylhexylat), Titan(IV)-bis(1,3-diphenylpropan-1,3-dionato)-diisopropylat, Titan(IV)-bis(1,3-diphenylpropan-1,3-dionato)-diisobutylat, Titan(IV)-bis(1,3-diphenylpropan-1,3-dionato)-bis(2-ethylhexylat), Titan(IV)-bis(ethylacetoacetato)-diisopropylat, Titan(IV)-bis(ethylacetoacetato)-diisobutylat, Titan(IV)-bis(ethylacetoacetato)-bis(2-ethylhexylat), Titan(IV)-bis(tert.butylacetoacetato)-diisopropylat, Titan(IV)-bis(tert.butylacetoacetato)-diisobutylat, Titan(IV)-bis(tert.butylacetoacetato)-bis(2-ethylhexylat), Titan(IV)-bis(ethyl-3-oxo-valerato)-diisopropylat, Titan(IV)-bis(ethyl-3-oxo-valerato)-diisobutylat, Titan(IV)-bis(ethyl-3-oxo-valerato)-bis(2-ethylhexylat), Titan(IV)-bis(ethyl-3-oxo-hexanoato)-diisopropylat, Titan(IV)-bis(ethyl-3-oxo-hexanoato)-diisobutylat, Titan(IV)-bis(ethyl-3-oxo-hexanoato)-bis(2-ethylhexylat), Titan(IV)-bis(N,N-diethyl-3-oxo-butanamidato)-diisopropylat, Titan(IV)-bis(N,N-diethyl-3-oxo-butanamidato)-diisobutylat, Titan(IV)-bis(N,N-diethyl-3-oxo-butanamidato)-bis(2-ethylhexylat), Titan(IV)-bis(N,N-dibutyl-3-oxo-butanamidato)-diisopropylat, Titan(IV)-bis(N,N-dibutyl-3-oxo-butanamidato)-diisobutylat, Titan(IV)-bis-(N,N-dibutyl-3-oxo-butanamidato)-bis(2-ethylhexylat), Titan(IV)-bis(N,N-dibutyl-3-oxo-heptanamidato)-diisopropylat, Titan(IV)-bis(N,N-dibutyl-3-oxo-heptanamidato)-diisobutylat, Titan(IV)-bis(N,N-dibutyl-3-oxo-heptanamidato)-bis(2-ethylhexylat), Titan(IV)-bis(N,N-bis(2-ethylhexyl)-3-oxo-butanamidato)-diisopropylat, Titan(IV)-bis(N,N-bis(2-ethylhexyl)-3-oxo-butanamidato)-diisobutylat, Titan(IV)-bis(N,N-bis(2-ethylhexyl)-3-oxo-butanamidato)-bis(2-ethylhexylat), Titan(IV)-bis(N,N-bis(2-ethylhexyl)-2-oxo-cyclopentancarboxamidato)-diisopropylat, Titan(IV)-bis(N,N-bis(2-ethylhexyl)-2-oxo-cyclopentancarboxamidato)-diisobutylat, Titan(IV)-bis(N,N-bis(2-ethylhexyl)-2-oxo-cyclopentancarboxamidato)-bis(2-ethylhexylat), Titan(IV)-bis(N,N-dibutyl-3-oxo-3-phenylpropanamidato)-diisopropylat, Titan(IV)-bis(N,N-dibutyl-3-oxo-3-phenylpropanamidato)-diisobutylat und Titan(IV)-bis(N,N-dibutyl-3-oxo-3-phenylpropanamidato)-bis(2-ethylhexylat); Zirkonium(IV)-tetrakis(acetylacetonat), Zirkonium(IV)-tetrakis(1,3-diphenylpropan-1,3-dionat), Zirkonium(IV)-tetrakis(1-phenylbutan-1,3-dionat), Zirkonium(IV)-tetrakis(ethylacetoacetat), Zirkonium(IV)-tetrakis(tert.butylaceto-acetat), Zirkonium(IV)-tetrakis(ethyl-3-oxo-valerat), Zirkonium(IV)-tetrakis(ethyl-3-oxo-hexanoat), Zirkonium(IV)-tetrakis(N,N-diethyl-3-oxo-butanamidat), Zirkonium(IV)-tetrakis(N,N-dibutyl-3-oxo-butanamidat), Zirkonium(IV)tetrakis-(N,N-dibutyl-3-oxo-heptanamidat), Zirkonium(IV)-tetrakis(N,N-bis(2-ethylhexyl)-3-oxo-butanamidat), Zirkonium(IV)-tetrakis(N,N-bis-(2-ethylhexyl)-2-oxo-cyclo-pentancarboxamidat) und Zirkonium(IV)-tetrakis-(N,N-dibutyl-3-oxo-3-phenylpropanamidat); sowie die entsprechenden Verbindungen mit Hafnium(IV) anstelle von Zirkonium(IV).

Ganz besonders bevorzugt ist der Katalysatoren **K** ausgewählt aus der Gruppe bestehend aus Eisen(111)-tris(acetylacetonat), Eisen(111)-tris(ethylacetoacetat), Eisen(III)-tris(tert.butylacetoacetat), Eisen(III)-tris(N,N-diethyl-3-oxo-butanamidat), Titan(IV)-bis(acetylacetonato)-diisopropylat, Titan(IV)-bis(acetylacetonato)-diisobutylat, Titan(IV)-bis(acetylacetonato)-bis(2-ethylhexylat), Titan(IV)-bis-(ethylacetoacetato)-diisopropylat, Titan(IV)-bis-(ethylacetoacetato)-diisobutylat, Titan(IV)-bis(ethylacetoacetato)-bis(2-ethylhexylat), Titan(IV)-bis(tert.butylacetoacetato)-diisopropylat, Titan(IV)-bis(tert.butylacetoacetat)-diisobutylat, Titan-(IV)-bis(N,N-diethyl-3-oxo-butanamidato)-diisopropylat, Titan(IV)-bis(N,N-diethyl-3-oxo-butanamidato)-diisobutylat, Titan(IV)-bis(N,N-diethyl-3-oxo-butanamidato)-bis(2-ethylhexylat), Zirkonium(IV)-tetrakis(acetylacetonat), Zirkonium-(IV)-tetrakis(1,3-diphenylpropan-1,3-dionat), Zirkonium(IV)-tetrakis(ethylacetoacetat), Zirkonium(IV)-tetrakis(tert.butylacetoacetat), Zirkonium(IV)-tetrakis-(ethyl-3-oxovalerat), Zirkonium(IV)-tetrakis(ethyl-3-oxo-hexanoat), Zirkonium-(IV)-tetrakis(N,N-diethyl-3-oxo-butanamidat), Zirkonium(IV)-tetrakis(N,N-dibutyl-3-oxo-butanamidat), Zirkonium(IV)-tetrakis(N,N-dibutyl-3-oxo-heptanamidat) und Zirkonium(IV)-tetrakis(N,N-bis(2-ethylhexyl)-3-oxo-butanamidat).

Diese Katalysatoren **K** haben eine gute katalytische Aktivität und basieren auf einfach zugänglichen Ausgangsmaterialien.

Bevorzugt liegt der Katalysator **K** im Polyurethanklebstoff in einer solchen Menge vor, dass der Klebstoff eine Offenzeit im Bereich von 1 Minute bis 2 Stunden, bevorzugt 2 Minuten bis 1 Stunden, besonders bevorzugt 5 bis 30 Minuten, aufweist. Die Offenzeit des Klebstoffs wird dabei sowohl von der Art des Katalysators **K,** der Menge und der Art der verhandenen Triole **A1,** Diole **A2,** Polyamine **A3,** Polyisocyanate **B1,** Polyurethanpolymere **B2** und weiteren mit Isocyanaten reaktiven Substanzen, und von der herrschenden Temperatur und Luftfeuchtigkeit beeinflusst.

Der Katalysator **K** kann als Bestandteil der ersten und/oder als Bestandteil der zweiten Komponente im Polyurethanklebstoff vorhanden sein.

Der Katalysator **K** kann als Pulver, als Flüssigkeit oder als Lösung eingesetzt werden.

Der Polyurethanklebstoff kann als Bestandteil der ersten Komponente zusätzlich weitere mit Isocyanatgruppen reaktionsfähige Substanzen enthalten. Insbesondere kann die erste Komponente mindestens ein Polyol und/oder mindestens einen niedrigmolekularen zwei- oder mehrwertigen Alkohol enthalten, welche zur Herstellung des Polyurethanpolymers **B2** genannt wurden.

Weiterhin kann der Polyurethanklebstoff weitere Katalysatoren enthalten, die die Reaktion von Hydroxylgruppen mit Isocyanatgruppen beschleunigen, insbesondere Zinn-, Zink- und Wismut-organische Metallkatalysatoren, zum Beispiel Dibutylzinndilaurat, oder tertiäre Amine, Amidine oder Guanidine, zum Beispiel 1,4-Diazabicyclo[2.2.2]octan (DABCO) oder 1,8-Diazabicyclo[5.4.0]-undec-7-en (DBU). Bevorzugt enhält der Polyurethanklebstoff neben einem oder mehreren Katalysatoren **K** keine weiteren Aushärtungskatalysatoren.

Weiterhin kann der Polyurethanklebstoff einen sogenannten latenten Härter, insbesondere ein Polyaldimin, enthalten.

Der Polyurethanklebstoff kann neben den genannten weitere in zweikomponentigen Polyurethanzusammensetzungen üblicherweise eingesetzte Bestandteile enthalten, insbesondere die Folgenden:
- Weichmacher, insbesondere Carbonsäureester wie Phthalate, insbesondere Dioctylphthalat, Diisononylphthalat oder Diisodecylphthalat, Adipate, insbesondere Dioctyladipat, Azelate und Sebacate, organische Phosphor- und Sulfonsäureester oder Polybutene;
- Lösemittel;
- anorganische und organische Füllstoffe, insbesondere gemahlene oder gefällte Calciumcarbonate, welche gegebenenfalls mit Fettsäuren, insbesondere Stearaten, beschichtet sind, Baryt (Schwerspat), Talke, Quarzmehle, Quarzsand, Dolomite, Wollastonite, Kaoline, Glimmer, Aluminiumoxide, Kieselsäuren, insbesondere hochdisperse Kieselsäuren aus Pyrolyseprozessen, Zemente, Gipse, Flugaschen, Russe, insbesondere industriell hergestellte Russe (im Folgenden als "Russ" bezeichnet), Graphit, Metall-Pulver, beispielsweise von Aluminium, Kupfer, Eisen, Zink, Silber oder Stahl, PVC-Pulver oder Hohlkugeln;
- Fasern, beispielsweise aus Polyethylen;
- Pigmente, beispielsweise Titandioxid, Zinkoxid oder Eisenoxide;
- Rheologie-Modifizierer, insbesondere Verdickungsmittel oder Thixotropiermittel, zum Beispiel Schichtsilikate wie Bentonite, Derivate von Rizinusöl, hydriertes Rizinusöl, Polyamide, Polyamidwachse, Polyurethane, Harnstoffverbindungen, pyrogene Kieselsäuren, Celluloseether und hydrophob modifizierte Polyoxyethylene;
- Trocknungsmittel, wie beispielsweise Molekularsiebe, Calciumoxid, hochreaktive Isocyanate wie p-Tosylisocyanat, monomere Diisocyanate, Mono-Oxazolidine wie Incozol^{®} 2 (von Incorez), Orthoameisensäureester, Alkoxysilane wie Tetraethoxysilan und Organoalkoxysilane wie insbesondere Vinyltrimethoxysilan;
- Haftvermittler, beispielsweise Organoalkoxysilane wie Aminosilane, Mercaptosilane, Epoxysilane, Vinylsilane, (Meth)acrylsilane, Isocyanatosilane, Carbamatosilane, Alkylsilane, S-(Alkylcarbonyl)mercaptosilane und Aldiminosilane, sowie oligomere Formen dieser Silane, insbesondere 3-Glycidoxypropyltrimethoxysilan, 3-Aminopropyltrimethoxysilan, N-(2-Aminoethyl)-3-aminopropyl-trimethoxysilan, N-(2-Aminoethyl)-N'-[3-(trimethoxysilyl)propyl]ethylendiamin, 3-Mercaptopropyltrimethoxysilan, 3-Isocyanatopropyltrimethoxysilan, 3-Ureidopropyltrimethoxysilan, 3-Chloropropyltrimethoxysilan, Vinyltrimethoxysilan, oder die entsprechenden Organosilane mit Ethoxygruppen anstelle der Methoxygruppen;
- Stabilisatoren gegen Oxidation, Wärme, Licht- und UV-Strahlung;
- flammhemmende Substanzen, beispielsweise Aluminiumhydroxide, Magnesiumhydroxid, Phosphorsäureester;
- oberflächenaktive Substanzen, insbesondere Netzmittel, Verlaufsmittel, Entlüftungsmittel oder Entschäumer;
- Biozide wie beispielsweise Algizide, Fungizide oder das Pilzwachstum hemmende Substanzen.

Es ist vorteilhaft, beim Einsatz von weiteren Bestandteilen des Polyurethanklebstoffs darauf zu achten, dass diese die Lagerstabilität der jeweiligen Komponente nicht stark beeinträchtigen. Falls solche Substanzen zusammen mit Isocyanaten gelagert werden sollen, bedeutet dies insbesondere, dass sie kein oder höchstens Spuren von Wasser enthalten sollten. Es kann sinnvoll sein, gewisse Bestandteile vor dem Einmischen chemisch oder physikalisch zu trocknen.

Die Komponenten des Polyurethanklebstoffs werden vorteilhaft derart formuliert, dass das Mischungsverhältnis der Volumen zwischen der ersten und der zweiten Komponente im Bereich von 1:3 bis 3:1, insbesondere 1:2 bis 2:1, liegt. Bevorzugt beträgt dieses Verhältnis ungefähr 1:1.

Das Mischungsverhältnis wird vorzugsweise so eingestellt, dass im vermischten Polyurethanklebstoff das Verhältnis zwischen der Anzahl Isocyanatgruppen und der Anzahl gegenüber Isocyanaten reaktiven Gruppen, insbesondere die Summe aus OH- und NH₂-Gruppen, vor der Aushärtung ungefähr im Bereich von 1.2 bis 1, bevorzugt 1.1 bis 1, liegt.

Die Herstellung der beiden Komponenten erfolgt typischerweise getrennt voneinander und, zumindest für die zweite Komponente, unter Ausschluss von Feuchtigkeit. Die Komponenten werden typischerweise jeweils in einem eigenen Gebinde gelagert. Die weiteren Bestandteile des Polyurethanklebstoffs können als Bestandteil der ersten oder der zweiten Komponente vorhanden sein, wobei gegenüber Isocyanatgruppen reaktive weitere Bestandteile bevorzugt ein Bestandteil der ersten Komponente sind. Ein geeignetes Gebinde zum Lagern der jeweiligen Komponente ist insbesondere ein Fass, ein Hobbock, ein Beutel, ein Eimer, eine Büchse, eine Kartusche oder eine Tube.

Die beiden Komponenten werden vor der Anwendung getrennt voneinander gelagert und erst bei oder unmittelbar vor der Anwendung miteinander vermischt. Die Komponenten sind vorteilhaft in einer Verpackung, welche aus zwei voneinander getrennten Kammern besteht, vorhanden.

In einem weiteren Aspekt umfasst die Erfindung eine Packung bestehend aus einer Verpackung mit zwei voneinander getrennten Kammern, welche jeweils eine der beiden Komponenten des Polyurethanklebstoffs enthält.

Bevorzugte derartige Packungen sind einerseits side-by-side Doppelkartuschen oder Koaxialkartuschen, bei denen zwei röhrenförmige Kammern nebeneinander oder ineinander angeordnet sind und mit Kolben luft- und feuchtigkeitsdicht verschlossen sind. Über den Vortrieb dieser Kolben können die Komponenten aus der Kartusche ausgepresst werden. Die den Kolben entgegengesetzten Seiten der Rohre sind, gegebenenfalls über einen Adapter, derart modifiziert, dass die Kammeröffnungen im Bereich der Öffnung über eine Trennwand miteinander direkt verbunden sind. Vorteilhaft ist im Bereich der Austrittsöffnung der Kammern ein Gewinde angebracht, so dass ein Statikmischer oder ein dynamischer Mischer dicht angebracht werden kann. Derartige Packungen werden insbesondere für Kleinanwendungen bevorzugt, insbesondere für Füllmengen bis 1 Liter.

Für Anwendungen in grösseren Mengen, insbesondere für Anwendungen in der industriellen Fertigung, werden die beiden Komponenten vorteilhaft in Fässer oder Hobbocks abgefüllt und gelagert. Bei der Anwendung werden die Komponenten über Förderpumpen ausgepresst und über Leitungen einer Mischapparatur, wie sie üblicherweise für Zweikomponentenklebstoffe in der industriellen Fertigung verwendet wird, zudosiert.

Das Mischen erfolgt typischerweise über Statikmischer oder mit Hilfe von dynamischen Mischern. Beim Mischen ist darauf zu achten, dass die zwei Komponenten möglichst homogen vermischt werden. Werden die zwei Komponenten schlecht gemischt, treten lokale Abweichungen vom vorteilhaften Mischungsverhältnis auf, was sich in einer Verschlechterung der mechanischen Eigenschaften auswirken kann. Um die Mischqualität visuell zu kontrollieren kann es vorteilhaft sein, wenn die beiden Komponenten zwei unterschiedliche Farben aufweisen. Eine gute Vermischung liegt dann vor, wenn der vermischte Klebstoff eine homogene Mischfarbe aufweist, ohne sichtbare Streifen oder Schlieren.

Beim Kontakt der ersten Komponente mit Isocyanatgruppen der zweiten Komponente beginnt die Aushärtung durch chemische Reaktion. Dabei reagieren die Aminogruppen des Polyamins **A3** und die Hydroxylgruppen des Triols **A1** und des Diols **A2** und gegebenenfalls vorhandene weitere gegenüber Isocyanatgruppen reaktive Substanzen mit vorhandenen Isocyanatgruppen. Überschüssige Isocyanatgruppen reagieren mit vorhandener Feuchtigkeit. Als Resultat dieser Reaktionen härtet der Polyurethanklebstoff zu einem festen Material aus. Dieser Vorgang wird auch als Vernetzung bezeichnet.

Ein weiterer Gegenstand der Erfindung ist somit auch ein ausgehärteter Polyurethanklebstoff, erhalten aus der Aushärtung eines Polyurethanklebstoffs wie im vorliegenden Dokument beschrieben.

Ein weiterer Aspekt der vorliegenden Erfindung betrifft ein Verfahren zum Verkleben von einem ersten Substrat mit einem zweiten Substrat, welches die Schritte umfasst:
- Mischen der beiden vorgängig beschriebenen Komponenten,
- Applizieren des vermischten Polyurethanklebstoffs auf mindestens eine der zu verklebenden Substratoberflächen,
- Fügen der zu verklebenden Substrate innerhalb der Offenzeit,
- Aushärten des Polyurethanklebstoffs.

Dabei können die beiden Substrate aus dem gleichen oder unterschiedlichen Materialien bestehen.

In diesem Verfahren sind geeignete Substrate insbesondere
- Glas, Glaskeramik;
- Metalle und Legierungen, wie Aluminium, Eisen, Stahl und Buntmetalle, sowie oberflächenveredelte Metalle und Legierungen, wie verzinkte oder verchromte Metalle;
- beschichtete und lackierte Substrate, wie pulverbeschichtete Metalle oder Legierungen und lackierte Bleche;
- Kunststoffe, wie Polyvinylchlorid (Hart- und Weich-PVC), Acrylonitril-Butadien-Styrol-Copolymere (ABS), Polycarbonat (PC), Polyamid (PA), Polyester, Poly(methylmethacrylat) (PMMA), Polyester, Epoxidharze, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites, sowie
- Beton, Mörtel, Backstein, Ziegel, Gips und Natursteine wie Granit oder Marmor.

In diesem Verfahren ist eines oder beide Substrate bevorzugt ein Metall oder eine Keramik oder ein Glasfaser-verstärkter Kunststoff oder ein Kohlefaser-verstärkter Kunststoff.

Die Substrate können bei Bedarf vor dem Applizieren des Klebstoffs vorbehandelt werden. Derartige Vorbehandlungen umfassen insbesondere physikalische und/oder chemische Reinigungsverfahren, sowie das Aufbringen eines Haftvermittlers, einer Haftvermittlerlösung oder eines Primers.

Aus diesem beschriebenen Verfahren zum Verkleben entsteht ein Artikel, bei welchem der Klebstoff zwei Substrate kraftschlüssig miteinander verbindet. Dieser Artikel ist insbesondere ein Bauwerk, beispielsweise eine Brücke, ein industrielles Gut oder ein Konsumgut, insbesondere ein Fenster, ein Rotorblatt einer Windkraftanlage oder ein Transportmittel, insbesondere ein Fahrzeug, bevorzugt ein Automobil, ein Bus, ein Lastkraftwagen, ein Zug oder ein Schiff, sowie ein Flugzeug oder ein Helikopter; oder ein Anbauteil eines solchen Artikels.

Ein weiterer Gegenstand der Erfindung ist ein Artikel erhalten aus dem vorgehend beschriebenen Verfahren zum Verkleben.

Der beschriebene Polyurethanklebstoff weist sehr gute Eigenschaften als struktureller Klebstoff auf.

Als struktureller Klebstoff wird hierbei ein Klebstoff bezeichnet, welcher im ausgehärteten Zustand einen Teil der tragenden Struktur der verklebten Bauteile bildet. Der strukturelle Klebstoff ist somit ein wichtiges Bindeglied der Konstruktion, innerhalb welcher er zwei Bauteile bzw. Substrate verbindet. An seine mechanischen Eigenschaften werden dementsprechend hohe Anforderungen gestellt.

Bevorzugt weist ein ausgehärteter struktureller Klebstoff bei Raumtemperatur eine Zugfestigkeit von mehr als 5 MPa, besonders bevorzugt mehr als 8 MPa, insbesondere mehr als 10 MPa, auf.

Bevorzugt weist der ausgehärtete strukturelle Klebstoff bei Raumtemperatur eine Bruchdehnung von mehr als 100 %, insbesondere mehr als 150 %, auf. Bevorzugt weist der ausgehärtete strukturelle Klebstoff bei Raumtemperatur ein Elastizitätsmodul im Bereich von mindestens 20 MPa, besonders bevorzugt mindestens 25 MPa, insbesondere mindestens 30 MPa, auf.

Bevorzugt weist der ausgehärtete strukturelle Klebstoff eine Glasübergangstemperatur unterhalb von -35 °C, bevorzugt unterhalb von -37 °C, insbesondere unterhalb von -40 °C, auf.

Dabei sind diese genannten Werte gemessen wie in den nachfolgenden Beispielen beschrieben.

Eine weitere wichtige Eigenschaft eines strukturellen Klebstoffs ist seine gute Verarbeitbarkeit. Dabei sollen die beiden Komponenten einzeln und beim Vermischen eine niedrige Viskosität aufweisen, sodass sie gut förderbar und mischbar sind, dann aber sehr schnell eine solche Viskosität aufbauen, dass unmittelbar ein strukturviskoses, standfestes Material erhalten wird, sodass Schichtdicken von bis zu 10 Millimetern und mehr aufgetragen werden können.

Mit dem beschriebenen Polyurethanklebstoff sind diese Anforderungen besonders gut erfüllbar. Insbesondere die Anwesenheit des speziellen Katalysators K bei der Aushärtung ermöglicht durch seine die Glasübergangstemperatur senkende Wirkung besonders gute mechanische Eigenschaften in der Kälte.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### 1. verwendete Substanzen:

| | |
|---|---|
| Polyisocyanat | modifiziertes Diphenylmethandiisocyanat enthaltend MDI-Carbodiimid-Addukte, bei Raumemperatur flüssig, NCO-Gehalt 29.4 Gewichts-% (Isonate^{®} M 143 von Dow) |
| Triol | EO-endcapped Polyoxypropylentriol, OH-Zahl 34.7 mg KOH/g (Voranol^{®} CP 4755 von Dow) |
| MXDA | 1,3-Bis-(aminomethyl)benzol |
| BAC | 1,3-Bis-(aminomethyl)cyclohexan |
| Polyether-Triamin | Polyoxypropylen-Triamin, Amin-Zahl 346.3 mg KOH/g (Jefifamine^{®} T-403 von Huntsman) |
| Polyether-Diamin | Polyoxypropylen-Diamin, Amin-Zahl 467.5 mg KOH/g (Jefifamine^{®} D-230 von Huntsman) |
| Kieselsäure | pyrogene Kieselsäure, hydrophob modifiziert |
| ***Zr-Ch1*** | Zirkonium-Chelat-Komplex in Reaktivverdünner und tert.Butylacetat, Zirkonium-Gehalt 3.5 Gewichts-% (K-Kat^{®} A-209 von King Industries) |
| ***Zr-Ch2*** | Zirkonium(IV)-tetrakis(1,3-diphenylpropan-1,3-dionat) in Tetra-ethylenglykoldimethylether/Acetylaceton, Zirkonium-Gehalt 1.8 Gewichts-% |
| ***Fe-Ch1*** | Eisen (III)-tris(N,N-diethyl-3-oxobutanamidat), Eisen-Gehalt 6.5 Gewichts-% |
| ***Ti-Ch1*** | Titan(IV)-bis(ethylacetoacetato)-diisobutylat, Titan-Gehalt 9.9 Gewichts-% (Tyzor^{®} IBAY von Du Pont/ Dorf Ketal) |
| ***DABCO*** | 1,4-Diazabicyclo[2.2.2]octan, 33.0 Gewichts-% in Dipropylenglykol (DABCO 33 LV^{®} von Air Products) |
| ***DBTDL*** | Dibutylzinndilaurat in Diisodecylphthalat, Zinn-Gehalt 1.9 Gewichts-% (von Sigma-Aldrich) |
| ***Sn-1*** | Zinn(II)-2-ethylhexanoat, Zinn-Gehalt 28.0 Gewichts-% (von Sigma-Aldrich) |
| ***Bi-Ch1*** | Bismut(III)-neodecanoat-oxinat in Neodecansäure/Diisodecyl-phthalat, Bismut-Gehalt 5.8 Gewichts-% |
| ***Bi-Ch2*** | Bismut(III)-tris(N,N-diethyl-3-oxo-butanamidat) in Neodecansäure, Bismut-Gehalt 9.3 Gewichts-% |
| ***Zn-1*** | Zink(II)-neodecanoat, Zink-Gehalt 18 Gewichts-% (von Alpha Aesar) |
| ***Zr-3*** | Zirkonium(IV)-neodecanoat, Zirkonium-Gehalt 12.1 Gewichts-% (BiCAT^{®} 4130 von Shepherd) |
| ***Fe-2*** | Eisen(III)-2-ethylhexanoat, Eisen-Gehalt 6 Gewichts-% (von AMSPEC) |
| ***Ti-2*** | Titan(IV)-tetra-n-butylat, Titan-Gehalt 14.1 Gewichts-% (von Sigma Aldrich) |

***Zr-Ch2*** wurde hergestellt, indem 9.36 g Zirkonium(IV)-tetrakis(isopropoxid) 70 Gewichts-% in Isopropanol und 17.94 g 1,3-Diphenyl-1,3-propandion vermischt, 2 Stunden bei 25 °C gerührt, anschliessend im Vakuum von den flüchtigen Bestandteilen befreit und der erhaltende Feststoff schliesslich in einer Mischung aus 40 g Tetraethylenglykoldimethylether und 40 g Acetylaceton gelöst wurde.

***Fe-Ch1*** wurde hergestellt, indem 4.4 g getrocknetes Fe(III)-tris(2-ethylhexanoat) und 9.3 g N,N-Diethyl-3-oxobutanamid vermischt, unter Rühren während 3 Stunden auf 90 °C erwärmt, dann im Vakuum die flüchtigen Bestandteile entfernt und schliesslich abgekühlt wurden.

***Bi-Ch1*** wurde hergestellt, indem 1.25 g Coscat^{®} 83 (Bismut(III)-tris(neodecanoat) in Neodecansäure, Bismut-Gehalt 16.0 Gewichts-%, von Erbslöh) und eine Lösung aus 0.44 g 8-Hydroxychinolin in 3.27 Diisodecylphthalat vermischt, unter Rühren 2 Stunden auf 80 °C erwärmt und anschliessend abgekühlt wurden.

***Bi-Ch2*** wurde hergestellt, indem 7.75 g Coscat^{®} 83 (Bismut(III)-tris(neodecanoat) in Neodecansäure, Bismut-Gehalt 16.0 Gewichts-%, von Erbslöh) und 2.85 g N,N-Diethyl-3-oxobutanamid vermischt, unter Rühren 2 Stunden auf 80 °C erwärmt und anschliessend abgekühlt wurden.

Das ***Polymer-1*** wurde hergestellt, indem 1300 g Polyoxypropylen-Diol (Acclaim^{®} 4200 N von Bayer; OH-Zahl 28.5 mg KOH/g), 2600 g Polyoxypropylen-polyoxyethylen-Triol (Caradol^{®} MD34-02 von Shell; OH-Zahl 35.0 mg KOH/g), 600 g 4,4`-Methylendiphenyldiisocyanat (Desmodur^{®} 44 MC L von Bayer) und 500 g Diisodecylphthalat nach bekanntem Verfahren bei 80 °C zu einem NCOterminierten Polyurethanpolymer mit einem Gehalt an freien Isocyanat-Gruppen von 2.05 Gewichts-% umgesetzt wurden.

### 2. Herstellung von Polyurethanklebstoffen

Für jeden Klebstoff wurden die in den Tabellen 1 bis 4 angegebenen Inhaltsstoffe in den angegebenen Mengen (in Gewichtsteilen) der ersten Komponente ("Komponente-1") mittels eines Zentrifugalmischers (SpeedMixer™ DAC 150, FlackTek Inc.) unter Feuchtigkeitsausschluss zu einer homogenen Paste verarbeitet und aufbewahrt. Ebenso wurden die in den Tabellen 1 bis 4 angegebenen Inhaltsstoffe der zweiten Komponente ("Komponente-2") verarbeitet und aufbewahrt. Anschliessend wurden die beiden Komponenten mittels des Zentrifugalmischers unter Feuchtigkeitsausschluss zu einer homogenen Paste verarbeitet und diese unverzüglich folgendermassen geprüft:

Als Mass für die Offenzeit wurde die Zeit bis zur Klebefreiheit ("tack-free time") bestimmt. Dazu wurden einige Gramm des Klebstoffs in einer Schichtdicke von ca. 2 mm auf Pappkarton aufgetragen und im Normklima die Zeitdauer bestimmt, bis beim leichten Antippen der Oberfläche des Klebstoffs mittels einer Pipette aus LDPE erstmals keine Rückstände auf der Pipette mehr zurückblieben.

Zur Bestimmung der mechanischen Eigenschaften wurde der Klebstoff auf einer PTFE-beschichteten Folie zu einem Film von 2 mm Dicke verpresst, dieser während 7 Tagen im Normklima gelagert, einige Hanteln mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf Zugfestigkeit (Bruchkraft), **Bruchdehnung** und **E-Modul** (bei 0.5-5 % Dehnung) geprüft. Dabei dienen die Werte des E-Moduls und der Zugfestigkeit als Mass für die Festigkeit der Zusammensetzung.

Zur Bestimmung der der **Glasübergangstemperatur (T_{g})** wurde der Klebstoff auf einer PTFE-beschichteten Folie zu einem Film von 2 mm Dicke verpresst, dieser während 7 Tagen im Normklima gelagert, eine scheibenförmige Probe von 10 mm Duchmesser ausgestanzt und auf einem Mettler DMA/SDTA 861 e der Tg bestimmt (DMTA-Methode, Messung in Scherung, 10 Hz Anregungsfrequenz, Aufheizrate 5 K/min). Die Probe wurde dabei auf - 60 °C abgekühlt und unter Bestimmung von Speichermodul G' [MPa] und Verlustmodul G" [MPa] auf 200 °C erwärmt. Beim Maximalwert des Quotienten G"/G' wurde der Tg abgelesen.

Die Resultate sind in den Tabellen 1 bis 4 angegeben.

Bei den Klebstoffen **Z-1** bis **Z-15** handelt es sich um erfindungsgemässe Beispiele, bei den Klebstoffen **Ref-1** bis **Ref-18** handelt es sich um Vergleichsbeispiele.

Die Klebstoffe ***Z-1, Z-2, Z-3*** und **Z-4** wurden 1 Minute nach Abschluss der Mischzeit der beiden Komponenten auf ein zuvor mit Isopropanol entfettetes Glasfaser-verstärktes Kunststoffplättchen aufgetragen und mit einem zweiten gleichen Plättchen bedeckt und verpresst, sodass eine überlappende Klebefläche von 15 x 45 mm bei einer Schichtdicke von 2 mm entstand, für 24 h bei 23°C und anschliessend 3h bei 80°C ausgehärtet und nach einer Konditionierungszeit von 24h bei 23 °C die Zugscherfestigkeit nach DIN EN 1465 bestimmt, wobei ein jeweils kohäsives Bruchbild resultierte.

Ebenso wurden mit den Klebstoffen ***Z-1, Z-2, Z-3*** und ***Z-4*** jeweils zwei Kohlefaser-verstärkte Kunststoffplättchen verklebt und die Zugscherfestigkeit bestimmt, wobei jeweils ein kohäsoves Bruchbild resultierte.

Die Vergleichs-Klebstoffe ***Ref-12*** und ***Ref-13*** waren unmittelbar nach dem Vermischen der beiden Komponenten flüssig, während die übrigen Klebstoffe unmittelbar nach dem Vermischen eine gute Standfestigkeit aufwiesen.

Die ausgehärteten Filme von **Ref-3** und **Ref-6** wiesen viele Blasen auf. Die übrigen ausgehärteten Filme waren entweder frei von Blasen oder wiesen nur wenige feine Blasen auf.

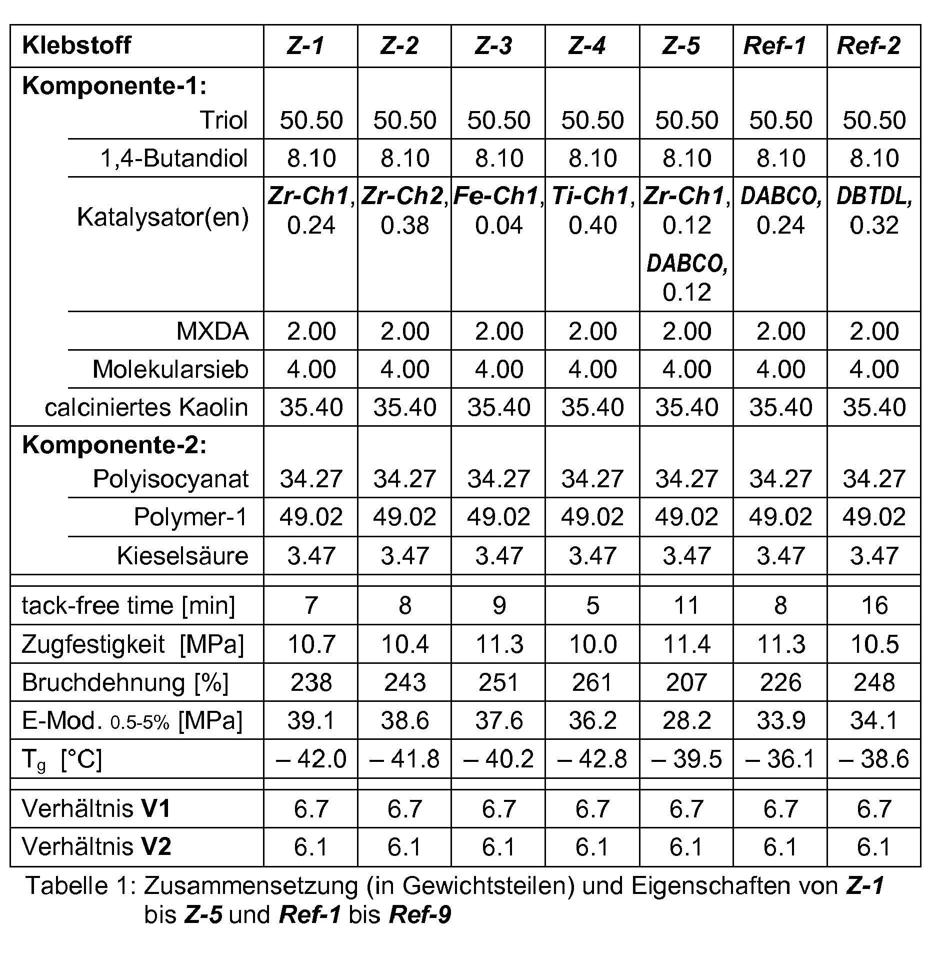

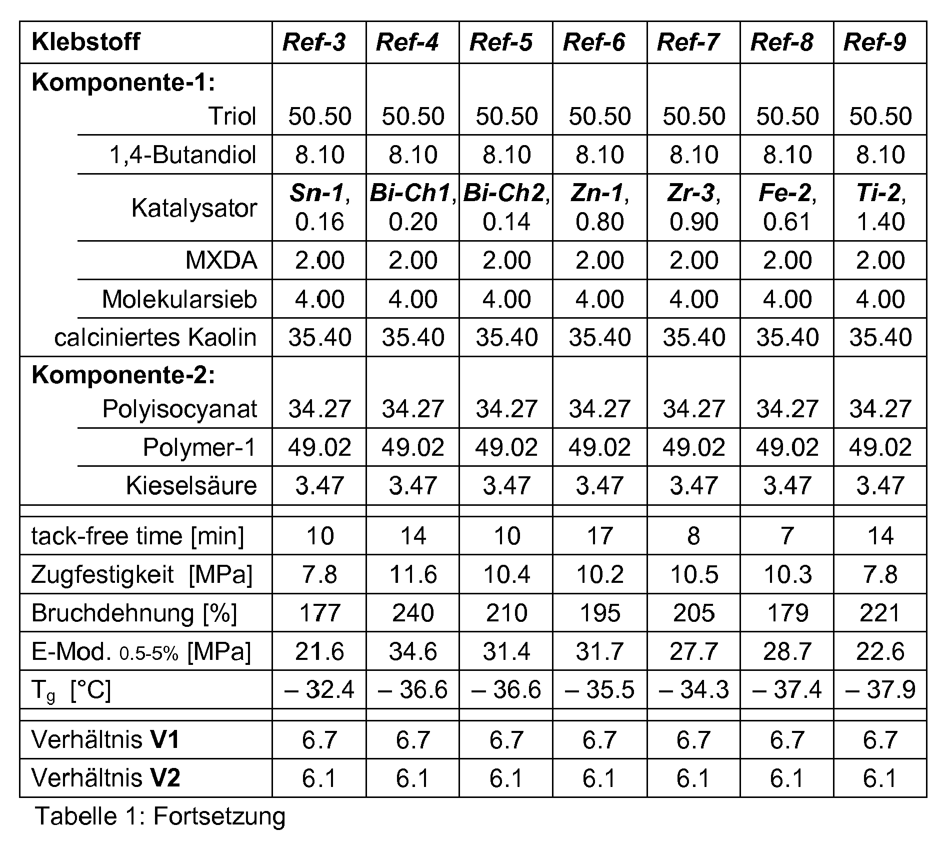

**Tabelle 2: Zusammensetzung (in Gewichtsteilen) und Eigenschaften von Z-6 bis Z-7 und Ref-10 bis Ref-11**

| **Klebstoff** | | ***Z-6*** | ***Ref-10*** | ***Z-7*** | ***Ref-11*** |
|---|---|---|---|---|---|
| **Komponente-1:** | | | | | |
| | Triol | 50.50 | 50.50 | 50.50 | 50.50 |
| | 1,4-Butandiol | 6.40 | 6.40 | 5.10 | 5.10 |
| | Katalysator | ***Zr-Ch1,*** 0.25 | ***DABCO,*** 0.24 | ***Zr-Ch1,*** 0.25 | ***DABCO,*** 0.24 |
| | MXDA | 1.87 | 1.87 | 2.00 | 2.00 |
| | Molekularsieb | 4.00 | 4.00 | 4.00 | 4.00 |
| | calciniertes Kaolin | 35.40 | 35.40 | 35.40 | 35.40 |

| **Komponente-2:** | | | | | |
|---|---|---|---|---|---|
| | Polyisocyanat | 28.66 | 28.66 | 24.81 | 24.81 |
| | Polymer-1 | 40.99 | 40.99 | 35.49 | 35.49 |
| | Kieselsäure | 2.90 | 2.90 | 2.51 | 2.51 |
| | | | | | |
| tack-free time [min] | | 5 | 7 | 6 | 6 |
| Zugfestigkeit [MPa] | | 10.6 | 9.6 | 10.0 | 9.5 |
| Bruchdehnung [%] | | 282 | 208 | 248 | 205 |
| E-Mod. _{0.5-5%} [MPa] | | 29.5 | 23.6 | 24.7 | 19.3 |
| T_{g} [°C] | | - 39.2 | - 32.1 | - 37.4 | - 33.2 |
| | | | | | |
| Verhältnis **V1** | | 5.4 | 5.4 | 4.6 | 4.6 |
| Verhältnis **V2** | | 5.2 | 5.2 | 3.9 | 3.9 |

**Tabelle 3: Zusammensetzung (in Gewichtsteilen) und Eigenschaften von Z-8 und Z-9 und Ref-12 bis Ref-15**

| **Klebstoff** | | ***Z-8*** | ***Ref-12*** | ***Z-9*** | ***Ref-13*** | ***Ref-14*** | ***Ref-15*** |
|---|---|---|---|---|---|---|---|
| **Komponente-1:** | | | | | | | |
| | Triol | 50.50 | 50.50 | 50.50 | 50.50 | 50.50 | 50.50 |
| | 1,3-Propandiol | 6.82 | 6.82 | - | - | - | - |
| | 1,5-Pentandiol | - | - | 9.47 | 9.47 | - | - |
| | 1,3-Butandiol | - | - | - | - | 8.10 | 8.10 |
| | Katalysator | ***Zr-Ch1,*** 0.29 | ***DABCO,*** 0.24 | ***Zr-Ch1,*** 0.24 | ***DABCO,*** 0.24 | ***Zr-Ch1,*** 0.24 | ***DABCO,*** 0.24 |
| | MXDA | 2.00 | 2.00 | 2.00 | 2.00 | 2.00 | 2.00 |
| | Molekularsieb | 4.00 | 4.00 | 4.00 | 4.00 | 4.00 | 4.00 |
| | calciniertes Kaolin | 35.40 | 35.40 | 35.40 | 35.40 | 35.40 | 35.40 |

| **Komponente-2:** | | | | | | | |
|---|---|---|---|---|---|---|---|
| | Polyisocyanat | 34.27 | 34.27 | 34.27 | 34.27 | 34.27 | 34.27 |
| | Polymer-1 | 49.02 | 49.02 | 49.02 | 49.02 | 49.02 | 49.02 |
| | Kieselsäure | 3.47 | 3.47 | 3.47 | 3.47 | 3.47 | 3.47 |
| | | | | | | | |
| tack-free time [min] | | 9 | 6 | 3 | 5 | 35 | 23 |
| Zugfestigkeit [MPa] | | 7.1 | 9.7 | 10.1 | 10.2 | 6.6 | 5.5 |
| Bruchdehnung [%] | | 193 | 202 | 302 | 223 | 402 | 214 |
| E-Mod. _{0.5-5%} [MPa] | | 34.0 | 31.6 | 47.1 | 32.3 | 4.9 | 6.5 |
| T_{g} [°C] | | | - 38.4 | - 43.6 | - 32.7 | + 0.2 | + 0.6 |
| | | | | | | | |
| Verhältnis **V1** | | 6.7 | 6.7 | 6.7 | 6.7 | - | - |
| Verhältnis **V2** | | 6.1 | 6.1 | 6.1 | 6.1 | - | - |

**Tabelle 4: Zusammensetzung (in Gewichtsteilen) und Eigenschaften von Z-12 bis Z-15 und Ref-16 bis Ref-17**

| **Klebstoff** | | ***Z-12*** | ***Ref-16*** | ***Z-13*** | ***Ref-17*** | ***Z-14*** | ***Z-15*** |
|---|---|---|---|---|---|---|---|
| **Komponente-1:** | | | | | | | |
| | Triol | 50.50 | 50.50 | 50.50 | 50.50 | 50.50 | 50.50 |
| | 1,4-Butandiol | 8.10 | 8.10 | 8.10 | 8.10 | 8.10 | 8.10 |
| | Katalysator | ***Zr-Ch1,*** 0.24 | ***DABCO,*** 0**.**24 | ***Zr-Ch1,*** 0.25 | ***DABCO,*** 0.24 | ***Zr-Ch2,*** 0.20 | ***Zr-Ch2,*** 0.27 |
| | BAC | 2.00 | 2.00 | - | - | - | - |
| | Polyether-Triamin | - | - | 2.00 | 2.00 | - | - |
| | Polyether-Diamin | - | - | - | - | 3.00 | 5.00 |
| | Molekularsieb | 4.00 | 4.00 | 4.00 | 4.00 | 4.00 | 4.00 |
| | calciniertes Kaolin | 35.40 | 35.40 | 35.40 | 35.40 | 35.40 | 35.40 |

| **Komponente-2:** | | | | | | | |
|---|---|---|---|---|---|---|---|
| | Polyisocyanat | 34.07 | 34.07 | 31.88 | 31.88 | 31.76 | 33.49 |
| | Polymer-1 | 48.73 | 48.73 | 45.61 | 45.61 | 45.43 | 47.91 |
| | Kieselsäure | 3.45 | 3.45 | 3.23 | 3.23 | 3.22 | 3.39 |
| | | | | | | | |
| tack-free time [min] | | 13 | 11 | 7 | 11 | 34 | 26 |
| Zugfestigkeit [MPa] | | 8.8 | 9.5 | 8.8 | 8.0 | 5.9 | 6.8 |
| Bruchdehnung [%] | | 198 | 206 | 169 | 164 | 168 | 202 |
| E-Mod. _{0.5-5%} [MPa] | | 30.5 | 23.5 | 31.2 | 20.3 | 22.9 | 22.5 |
| T_{g} [°C] | | - 39.2 | - 34.5 | - 37.5 | - 33.7 | -41.3 | - 40.3 |
| | | | | | | | |
| Verhältnis **V1** | | 6.7 | 6.7 | 6.2 | 6.2 | 6.6 | 7.1 |
| Verhältnis **V2** | | 6.4 | 6.4 | 14.6 | 14.6 | 7.2 | 4.3 |

## Patentansprüche

1. Polyurethanklebstoff bestehend aus einer ersten und einer zweiten Komponente, wobei
- die erste Komponente
a) mindestens ein Triol **A1** mit einem Molekulargewicht im Bereich von 1'000 bis 10'000 g/mol,
b) mindestens ein Diol **A2** mit zwei primären Hydroxylgruppen und einem Molekulargewicht im Bereich von 60 bis 150 g/mol, und
c) mindestens ein aliphatisches Polyamin **A3** mit einem Molekulargewicht im Bereich von 60 bis 500 g/mol enthält;
- die zweite Komponente
d) mindestens ein Polyisocyanat **B1** und
e) mindestens ein Isocyanatgruppen aufweisendes Polyurethanpolymer **B2** enthält;
- und der Polyurethanklebstoff weiterhin
f) mindestens einen Katalysator **K** in Form eines Metall-Chelat-Komplexes enthält, worin das Metall ausgewählt ist aus der Gruppe bestehend aus Fe(III), Ti(IV), Zr(IV) und Hf(IV),
- wobei das Triol **A1,** das Diol **A2** und das Polyamin **A3** in einer solchen Menge vorhanden sind, dass
g) das Verhältnis **V1** der Anzahl OH-Gruppen und NH₂-Gruppen von (**A2+A3)**/**A1** im Bereich von 3 bis 15 liegt, und
h) das Verhältnis **V2** der Anzahl OH-Gruppen und NH₂-Gruppen von **A2/A3** im Bereich von 2 bis 30 liegt.

2. Polyurethanklebstoff gemäss Anspruch 1, **dadurch gekennzeichnet, dass** das Triol ein Polyethertriol ist.

3. Polyurethanklebstoff gemäss Anspruch 1 oder 2, **dadurch gekennzeichnet, dass** das Triol primäre Hydroxylgruppen aufweist.

4. Polyurethanklebstoff gemäss einem der Ansprüche 1 bis 3, **dadurch gekennzeichnet, dass** das Diol ausgewählt ist aus der Gruppe bestehend aus 1,3-Propandiol, 1,4-Butandiol und 1,5-Pentandiol.

5. Polyurethanklebstofif gemäss einem der Ansprüche 1 bis 4, **dadurch gekennzeichnet, dass** das Polyamin ausgewählt ist aus der Gruppe bestehend aus 1,5-Diamino-2-methylpentan, 2,2,4- und 2,4,4-Trimethylhexamethylendiamin, 1,8-Octandiamin, 1,10-Decandiamin, 1,12-Dodecandiamin, 1-Amino-3-aminomethyl-3,5,5-trimethylcyclohexan, 2- und 4-Methyl-1,3-diaminocyclohexan und Mischungen davon, 1,3-Bis-(aminomethyl)cyclohexan, 1,4-Bis-(aminomethyl)cyclohexan, 2,5(2,6)-Bis-(aminomethyl)-bi-cyclo[2.2.1]heptan, 3(4),8(9)-Bis-(aminomethyl)-tricyclo[5.2.1.0^{2,6}]decan, Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 1,3- Bis-(aminomethyl)benzol und 1,4-Bis-(aminomethyl)benzol.

6. Polyurethanklebstoff gemäss einem der Ansprüche 1 bis 5, **dadurch gekennzeichnet, dass** das Verhältnis **V1** im Bereich von 4 bis 10 liegt.

7. Polyurethanklebstoff gemäss einem der Ansprüche 1 bis 6, **dadurch gekennzeichnet, dass** das Verhältnis **V2** im Bereich von 4.5 bis 15 liegt.

8. Polyurethanklebstoff gemäss einem der Ansprüche 1 bis 7, **dadurch gekennzeichnet, dass** das Polyisocyanat **B1** eine bei Raumtemperatur flüssige Form von 4,4'-, 2,4'- und 2,2'-Diphenylmethandiisocyanat und beliebige Gemische dieser Isomeren (MDI) in Form von polymerem MDI oder MDI mit Anteilen von Oligomeren oder Derivaten ist.

9. Polyurethanklebstoff gemäss einem der Ansprüche 1 bis 8, **dadurch gekennzeichnet, dass** das Polyurethanpolymer **B2** 50 - 95 Massenprozente Polyoxyalkyleneinheiten aufweist.

10. Polyurethanklebstoff gemäss einem der Ansprüche 1 bis 9, **dadurch gekennzeichnet, dass** das Polyurethanpolymer B2 Urethangruppen und freie Isocyanatgruppen aufweist, welche abgeleitet sind von 4,4'-Diphenylmethandiisocyanat.

11. Polyurethanklebstoff gemäss einem der Ansprüche 1 bis 10, **dadurch gekennzeichnet, dass** der Katalysator K mindestens einen Chelat-Liganden ausgewählt aus der Gruppe bestehend aus 1,3-Diketonat, 1,3-Ketoesterat und 1,3-Ketoamidat aufweist.

12. Polyurethanklebstoff gemäss einem der Ansprüche 1 bis 11, **dadurch gekennzeichnet, dass** der Katalysator **K** ausgewählt ist aus der Gruppe bestehend aus Eisen(III)-tris(acetylacetonat), Eisen(III)-tris(ethylacetoacetat), Eisen(III)-tris(tert.butylacetoacetat), Eisen(III)-tris(N,N-diethyl-3-oxo-butanamidat), Titan(IV)-bis(acetylacetonato)-diisopropylat, Titan(IV)-bis-(acetylacetonato)-diisobutylat, Titan(IV)-bis(acetylacetonato)-bis(2-ethylhexylat), Titan(IV)-bis(ethylacetoacetato)-diisopropylat, Titan(IV)-bis-(ethylacetoacetato)-diisobutylat, Titan(IV)-bis(ethylacetoacetato)-bis(2-ethylhexylat), Titan(IV)-bis(tert.butylacetoacetato)-diisopropylat, Titan(IV)-bis(tert.butylacetoacetat)-diisobutylat, Titan(IV)-bis(N,N-diethyl-3-oxo-butanamidato)-diisopropylat, Titan(IV)-bis(N,N-diethyl-3-oxo-butanamidato)-diisobutylat, Titan(IV)-bis(N,N-diethyl-3-oxo-butanamidato)-bis(2-ethylhexylat), Zirkonium(IV)-tetrakis(acetylacetonat), Zirkonium(IV)-tetrakis(1,3-diphenylpropan-1,3-dionat), Zirkonium(IV)-tetrakis(ethylacetoacetat), Zirkonium(IV)-tetrakis(tert.butylacetoacetat), Zirkonium(IV)-tetrakis(ethyl-3-oxovalerat), Zirkonium(IV)-tetrakis(ethyl-3-oxo-hexanoat), Zirkonium(IV)-tetrakis(N,N-diethyl-3-oxo-butanamidat), Zirkonium(IV)-tetrakis(N,N-dibutyl-3-oxo-butanamidat), Zirkonium(IV)-tetrakis(N,N-dibutyl-3-oxo-heptanamidat) und Zirkonium(IV)-tetrakis(N,N-bis(2-ethylhexyl)-3-oxo-butanamidat).

13. Verfahren zum Verkleben von einem ersten Substrat mit einem zweiten Substrat, welches die Schritte umfasst:
- Mischen der beiden Komponenten des Polyurethanklebstoffs gemäss einem der Ansprüche 1 bis 12,
- Applizieren des vermischten Polyurethanklebstoffs auf mindestens eine der zu verklebenden Substratoberflächen,
- Fügen der zu verklebenden Substrate innerhalb der Offenzeit,
- Aushärten des Polyurethanklebstoffs.

14. Verfahren gemäss Anspruch 13, **dadurch gekennzeichnet, dass** eines oder beide Substrate ein Metall oder eine Keramik oder ein Glasfaser-verstärkter Kunststoff oder ein Kohlefaser-verstärkter Kunststoff ist.

15. Artikel erhalten aus einem Verfahren zum Verkleben gemäss einem der Ansprüche 13 oder 14.
